# FASCICULE DE BREVET EUROPEEN

(11) **EP 0 834 247 B1**
(45) Date de publication et mention de la délivrance du brevet: **16.01.2002**
(21) Numéro de dépôt: 97440091.3
(22) Date de dépôt: 30.09.1997
(51) Int. Cl.: A01D 78/10

(54) **Machine de fenaison**
Heuwerbungsmaschine
Haymaking machine

(30) Priorité: 03.10.1996 FR 9612218
(43) Date de publication de la demande: 08.04.1998
(73) Titulaire: KUHN S.A., 67700 Saverne (FR)
(72) Inventeur: Aron, Jérôme, 67330 Dossenheim Sur Zinsel (FR); Quirin, Michel, 67310 Wasselonne (FR)
(74) Mandataire: Andres, Jean-Claude

(56) Documents cités:
- EP-A- 0 296 666
- EP-A- 0 300 937
- DE-U- 9 111 676
- DE-U- 29 513 712
- FR-A- 2 275 980
- FR-A- 2 661 312
- US-A- 4 178 998

## Description

La présente invention se rapporte à une machine de fenaison, notamment une faneuse, comportant un châssis pouvant être accouplé à un tracteur, lequel châssis se compose d'un tronçon central et de plusieurs tronçons latéraux qui sont articulés entre eux et qui portent des rotors montés sur des axes supports situés à des distances sensiblement identiques les uns des autres, lesquels rotors sont entraînés en rotation autour desdits axes au moyen d'organes de transmission qui sont logés dans les tronçons du châssis, lesdits tronçons latéraux pouvant être transposés au moyen de vérins hydrauliques dans une position de travail dans laquelle ils sont sensiblement alignés et dans une position de transport dans laquelle ils sont repliés sensiblement au-dessus du tronçon central.

Une machine de ce genre est connue dans le brevet FR-2 661 312. Sur cette machine, le châssis se compose d'un tronçon central et de trois tronçons latéraux de chaque côté dudit tronçon central. Ce dernier possède deux rotors tandis que chaque tronçon latéral en possède un seul. Grâce à sa largeur de travail relativement importante, cette machine répond aux besoins des exploitations agricoles moyennes. Cependant, en raison du regroupement des exploitations et de l'augmentation des surfaces qui en résulte, la demande s'oriente vers des machines de fenaison encore plus larges et plus performantes au travail.

Sur d'autres machines de grandes largeurs, les tronçons latéraux du châssis se replient vers l'avant ou vers l'arrière autour d'axes sensiblement verticaux pour le transport. Dans un tel cas, la longueur de la machine est très importante au transport et son centre de gravité est très éloigné du tracteur. Elle est alors plus difficile à déplacer.

La présente invention a pour but de proposer une machine de fenaison de très grande largeur de travail et qui est facilement repliable et aisément déplaçable au transport.

A cet effet, d'importantes caractéristiques de l'invention consistent en ce que sur chaque côté du tronçon central sont disposés quatre tronçons latéraux qui sont articulés entre eux au moyen d'axes dirigés sensiblement dans la direction d'avancement, que la longueur de chaque premier tronçon latéral est au moins égale à la distance entre les axes supports de deux rotors voisins, que la longueur de chaque deuxième tronçon latéral est nettement supérieure à la distance entre les axes supports de deux rotors voisins, que la longueur de chaque troisième tronçon latéral est nettement inférieure à la distance entre les axes supports de deux rotors voisins et que la longueur de chaque quatrième tronçon latéral est au plus égale à la distance entre les axes supports de deux rotors voisins.

Cet agencement permet de réaliser une machine de fenaison avec dix rotors qui permettent d'atteindre une grande largeur de travail et sur laquelle les tronçons latéraux peuvent être repliés sensiblement au-dessus du tronçon central pour le transport et/ou la dépose. Dans cette position repliée, les premiers et deuxièmes tronçons latéraux sont dirigés vers le haut et les troisièmes et quatrièmes tronçons latéraux sont dirigés vers le bas à partir de leurs axes d'articulation respectifs. L'encombrement global de la machine est alors relativement réduit et son centre de gravité reste près du tracteur.

Par ailleurs, chaque tronçon latéral ne porte qu'un seul rotor, ce qui lui permet de bien s'adapter aux dénivellations du sol durant le travail.

Une autre caractéristique de l'invention consiste en ce que de chaque côté du tronçon central un premier vérin hydraulique relie ledit tronçon central au deuxième tronçon latéral et un second vérin hydraulique relie ledit deuxième tronçon latéral au troisième tronçon latéral. Ces vérins hydrauliques permettent d'obtenir tout d'abord un repliement de près de 180° des troisièmes et quatrièmes tronçons latéraux et ensuite un déplacement vers le haut d'environ 90° de tous les tronçons latéraux en vue de la réduction de l'encombrement de la machine au transport. Ces vérins hydrauliques permettent également d'obtenir un déplacement inverse de ces tronçons latéraux en vue du dépliage de la machine pour le travail.

Selon une autre caractéristique de l'invention, un dispositif de freinage est monté entre chaque troisième et quatrième tronçons latéraux. Ce dispositif ralentit les déplacements du quatrième tronçon latéral par rapport au troisième tronçon latéral lors des transpositions de la machine. Ce dispositif peut également comporter un arrêt qui limite le déplacement du quatrième tronçon latéral correspondant dans la position repliée pour le transport.

Selon une autre caractéristique de l'invention, chaque premier tronçon latéral de la machine comporte un dispositif de blocage du quatrième tronçon latéral correspondant dans la position repliée. Ce blocage s'effectue automatiquement lors du repliement. De chaque côté de la machine les tronçons latéraux sont ainsi liés entre eux, ce qui augmente la stabilité durant le transport.

D'autres caractéristiques et avantages de l'invention ressortiront de la description ci-après d'un exemple de réalisation non limitatif de l'invention, avec référence aux dessins annexés dans lesquels :
- la figure 1 représente une vue de dessus d'une partie d'une machine selon l'invention en position de travail ;
- la figure 2 représente une vue de derrière de la partie de la machine selon la figure 1 ;
- la figure 3 représente une vue de derrière de la même partie de la machine dans une position partiellement repliée ;
- la figure 4 représente une vue de derrière de la machine complète en position de transport.

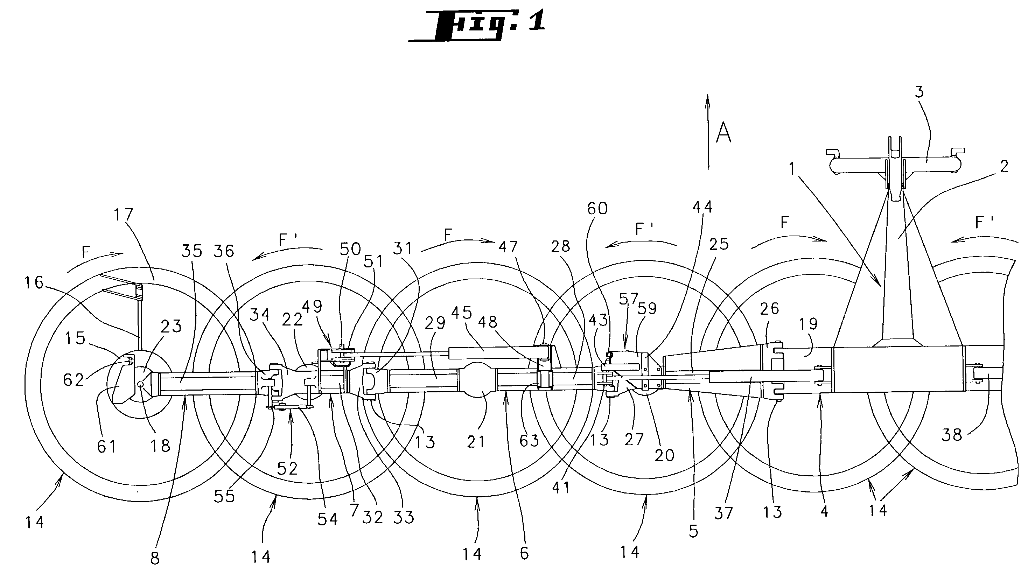

Sur les figures 1 à 3, seule la partie gauche de la machine est entièrement représentée pour une meilleure clarté. On comprendra que la partie droite est symétrique et présente les mêmes caractéristiques. Cette machine comporte un châssis (1) pouvant être accouplé à un tracteur servant à l'animer et à la déplacer dans la direction (A). A cet effet, le châssis (1) possède une poutre (2) qui porte à son extrémité avant un dispositif d'accouplement (3). Ce châssis (1) se compose par ailleurs d'un tronçon central (4) et de quatre tronçons latéraux (5 à 8 et 9 à 12) de chaque côté dudit tronçon central (4). Au total, le châssis (1) comprend huit tronçons latéraux. Selon leur position par rapport au tronçon central (4), ces tronçons latéraux (5 à 12) sont appelés ci-après premiers, deuxièmes, troisièmes et quatrièmes tronçons latéraux. La poutre (2) est fixée au tronçon central (4). Les tronçons (4 à 12) sont articulés entre eux au moyen d'axes d'articulation (13) qui sont sensiblement horizontaux et dirigés dans la direction d'avancement (A).

Le tronçon central (4) comporte deux rotors (14) et chaque tronçon latéral (5 à 12) porte un seul rotor (14). Chacun de ces rotors (14) est constitué par un moyeu (15) sur lequel sont fixés plusieurs bras (16) portant des fourches de travail (17) à leurs extrémités libres. Chacun de ces moyeux (15) est monté de manière à pouvoir tourner sur un axe support (18). Celui-ci est sensiblement vertical ou incliné dans la direction d'avancement (A). Les axes supports (18) sont montés dans des paliers prévus dans des boîtiers (19 à 23) de leurs tronçons (4 à 12) respectifs. Ils se situent les uns des autres à des distances (D) sensiblement identiques. Chacun de ces axes supports (18) porte à son extrémité inférieure une ou deux roues (24) qui roulent sur le sol durant le travail.

Les rotors (14) peuvent être entraînés en rotation autour de leurs axes supports (18) au moyen d'arbres de transmission qui sont logés dans les tronçons (4 à 12). A cet effet, ces arbres de transmission comportent des pignons d'entraînement qui engrènent avec des couronnes dentées solidaires des moyeux (15) des rotors (14). Ces pignons d'entraînement et ces couronnes dentées se situent dans les boîtiers (19 à 23) desdits tronçons (4 à 12). Au niveau des axes d'articulation (13) entre ces tronçons (4 à 12), lesdits arbres de transmission sont reliés entre eux par des dispositifs d'accouplement à cardans ou à doigts. Ces dispositifs d'accouplement permettent aux arbres de transmission de pivoter avec leurs tronçons (4 à 12) respectifs autour de leurs axes d'articulation (13).

L'arbre de transmission qui est logé dans le tronçon central (4) comporte dans un carter (65) un pignon d'entraînement supplémentaire. Celui-ci est en prise avec un pignon qui est solidaire d'un arbre de transmission qui s'étend hors dudit carter (65). Cet arbre de transmission peut être relié à un arbre de prise de force du tracteur au moyen d'un arbre à cardans.

Chaque premier tronçon latéral (5, 9) se compose d'un tube (25), d'un boîtier (20) qui se situe au-dessus du rotor (14) correspondant et de deux embouts d'articulation (26 et 27) situés aux extrémités.

La longueur (L1) de chaque premier tronçon latéral (5, 9), c'est-à-dire la distance entre les axes d'articulation (13) situés à ses deux extrémités, est au moins égale à la distance (D) entre les axes supports (18) de deux rotors (14) voisins. Dans l'exemple de réalisation représenté, cette longueur (L1) est égale ou pratiquement égale à la distance (D).

Chaque deuxième tronçon latéral (6, 10) se compose de deux tubes (28 et 29), d'un boîtier (21) qui se situe au-dessus du rotor (14) correspondant et qui relie les deux tubes (28 et 29) entre eux et de deux embouts d'articulation (30 et 31) situés aux extrémités. La longueur (L2) de chaque deuxième tronçon latéral (6, 10) est nettement supérieure à la distance (D) entre les axes supports (18) de deux rotors (14) voisins. Dans l'exemple de réalisation, tel que représenté sur les figures annexées, cette longueur (L2) est environ 1,5 fois supérieure à la distance (D).

Chaque troisième tronçon latéral (7, 11) se compose d'un tube (32), d'un boîtier (22) qui se situe au-dessus du rotor (14) correspondant et de deux embouts d'articulation (33 et 34) qui se situent aux extrémités. Le tube (32) a une longueur relativement réduite de sorte que la longueur (L3) de chaque troisième tronçon latéral (7, 11) soit nettement inférieure à la distance (D) entre les axes supports (18) de deux rotors (14) voisins. Dans l'exemple de réalisation, tel que représenté sur les figures annexées, cette longueur (L3) est égale à environ 0,6 fois la distance (D).

Chaque quatrième tronçon latéral (8, 12) se compose d'un tube (35), d'un boîtier (23) qui se situe au-dessus du rotor (14) correspondant et d'un embout d'articulation (36). Sa longueur (L4), considérée à partir de son axe d'articulation (33), est au plus égale à la distance (D) entre les axes supports (18) de deux rotors (14) voisins. Cette longueur est avantageusement égale à environ 0,9 fois la distance (D).

Sur une machine construite selon le mode de réalisation représenté, la somme de la longueur (L1) du premier tronçon latéral (5, 9) et de la longueur (L2) du deuxième tronçon latéral (6, 10) est supérieure d'une valeur égale à environ la distance (D) entre deux rotors (14) voisins, à la somme de la longueur (L3) du troisième tronçon latéral (7, 11) et de la longueur (L4) du quatrième tronçon latéral (8, 12). Cet agencement permet de transposer les tronçons latéraux (5 à 12) dans une position de transport dans laquelle les premiers et les seconds tronçons latéraux (5, 9 et 6, 10) sont dirigés vers le haut à partir de leurs axes d'articulation (13) respectifs et les troisièmes et quatrièmes tronçons latéraux (7, 11 et 8, 12) sont dirigés vers le bas à partir de leurs axes d'articulation (13) respectifs. Ces tronçons latéraux (5 à 12) se situent alors pratiquement au-dessus du tronçon central (4).

De chaque côté du tronçon central (4) est accroché un premier vérin hydraulique (37, 38) qui relie ledit tronçon central (4) au deuxième tronçon latéral (6, 10). L'accrochage de chaque premier vérin hydraulique (37, 38) au tronçon central (4) est effectué au moyen d'un axe d'articulation (39) qui est logé dans des orifices oblongs de deux plaques parallèles (40) qui sont solidaires du tronçon central (4). L'accrochage de chaque premier vérin hydraulique (37, 38) au deuxième tronçon latéral (6, 10) est assuré à l'aide d'un axe d'articulation (41) qui est engagé dans des trous cylindriques prévus dans deux pattes parallèles (42) solidaires de l'embout d'articulation (30) correspondant. Sur chaque axe (41) est en sus articulé un arrêt (43) en forme de tige. L'extrémité libre de cet arrêt (43) coopère avec une butée (44) prévue sur le boîtier (20) du premier tronçon latéral (5). Cette butée (44) et cet arrêt (43) permettent de limiter l'angle de pivotement vers le haut du second tronçon latéral (6, 10) par rapport au premier tronçon latéral (5, 9).

De chaque côté du tronçon central (4) est prévu un second vérin hydraulique (45, 46) qui relie le deuxième tronçon latéral (6, 10) au troisième tronçon latéral (7, 11). Il est articulé sur le deuxième tronçon latéral (6, 10) au moyen d'un axe (47) qui est logé dans des trous cylindriques de deux pattes parallèles (48) solidaires dudit tronçon (6, 10). La liaison entre chaque deuxième vérin hydraulique (45, 46) et le troisième tronçon latéral (7, 11) correspondant est réalisé à travers des moyens (49) qui assurent un important bras de levier audit vérin hydraulique (45, 46) à la fois lors du repliage en position de transport et du retour en position de travail. Ces moyens (49) comprennent un tourillon (50) qui est solidaire du vérin hydraulique (45, 46). Ce tourillon (50) est guidé au moyen d'un disque excentré de telle sorte qu'il se déplace dans des fentes prévues dans des plaques (51) qui sont fixées sur le troisième tronçon latéral (7, 11) durant les transpositions des troisièmes et quatrièmes tronçons latéraux (7, 11 et 8, 12). Ce tourillon (50) maintient alors le vérin hydraulique (45, 46) éloigné de l'axe d'articulation (13) du troisième tronçon latéral (7, 11) à la fois dans la position de travail et dans la position de transport.

Les premiers et deuxièmes vérins hydrauliques (37, 38 et 45, 46) sont de préférence à double effet. Ils sont reliés au circuit hydraulique du tracteur et sont actionnés à partir de celui-ci.

Entre chaque troisième tronçon latéral (7, 11) et quatrième tronçon latéral (8, 12) est monté un dispositif de freinage (52, 53). Celui-ci se compose d'une pièce (54) en forme de fourreau qui est articulée sur le troisième tronçon latéral (7, 11) et d'une lame (55) qui est articulée sur le quatrième tronçon latéral (8, 12). Cette lame (55) est engagée dans la pièce (54) en forme de fourreau et peut y coulisser. Il est en sus prévue une bride (56) qui est munie d'une rondelle de freinage appliquée sur la lame (55). La pression avec laquelle elle est appliquée sur la lame (55) est réglable. Le frottement qui résulte de cette pression ralentit les déplacements de la lame (55) par rapport à la pièce (54). En conséquence, il freine également les déplacements du quatrième tronçon latéral (8, 12) autour de son axe d'articulation (13). La pièce (54) en forme de fourreau comporte un arrêt contre lequel bute la lame (55) lorsque le quatrième tronçon latéral (8, 12) est dans la position repliée. Cet arrêt détermine ainsi l'angle de repliage du quatrième tronçon latéral (8, 12) en position de transport.

De chaque côté du tronçon central (4) le premier tronçon latéral (5, 9) comporte un dispositif (57, 58) pour bloquer dans la position repliée pour le transport le quatrième tronçon latéral (8, 12) qui se situe du même côté par rapport au tronçon central (4). Chaque premier tronçon latéral (5, 9) comporte une plaque coudée (59) qui est fixée sur le boîtier (20) et qui porte un verrou (60) dirigé vers le quatrième tronçon latéral (8, 12) correspondant. Ce dernier comporte une patte (61) avec un orifice (62) dans lequel peut s'engager le verrou (60) dans la position repliée.

Chaque deuxième partie latérale (6, 10) comporte sur sa poutre (28) un appui (63, 64) pour la quatrième partie latérale (8, 12) en position repliée pour le transport. Cet appui (63, 64) comporte avantageusement une garniture en caoutchouc destinée à amortir les chocs et les bruits.

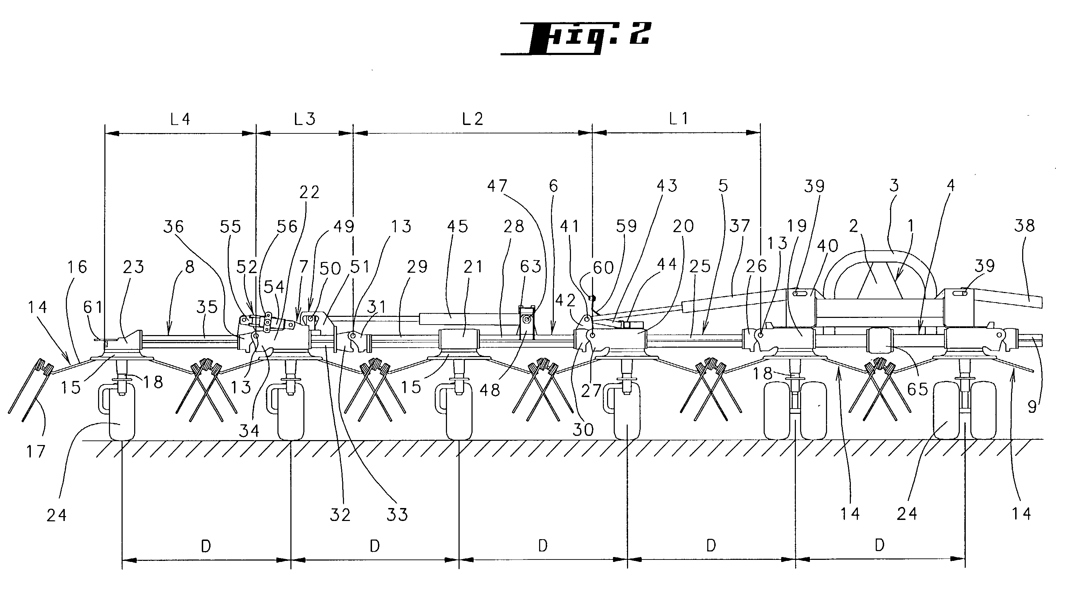

Dans la position de travail, la machine selon l'invention occupe la position représentée sur les figures 1 et 2. Elle est alors accouplée à un tracteur et peut être déplacée à l'aide de celui-ci dans le sens de la flèche (A). Tous les tronçons latéraux (5 à 12) sont déployés et sont portés par les roues (24) qui reposent sur le sol. Les rotors (14) sont entraînés en rotation autour des axes supports (18) de manière à tourner deux à deux en convergence à l'avant (flèches F et F').

Leurs fourches (17) ramassent alors les produits, par exemple des brins d'herbe coupés se trouvant au sol, les déplacent vers l'arrière et les étalent à nouveau tout en provoquant leur retournement. Les différents rotors (14) peuvent suivre les dénivellations du sol en pivotant avec les tronçons (4 à 12) autour des axes d'articulation (13) de ces derniers. Leurs pivotements vers le bas sont limités par les extrémités inférieures des embouts d'articulation (26, 27, 30, 31, 33, 34 et 36).

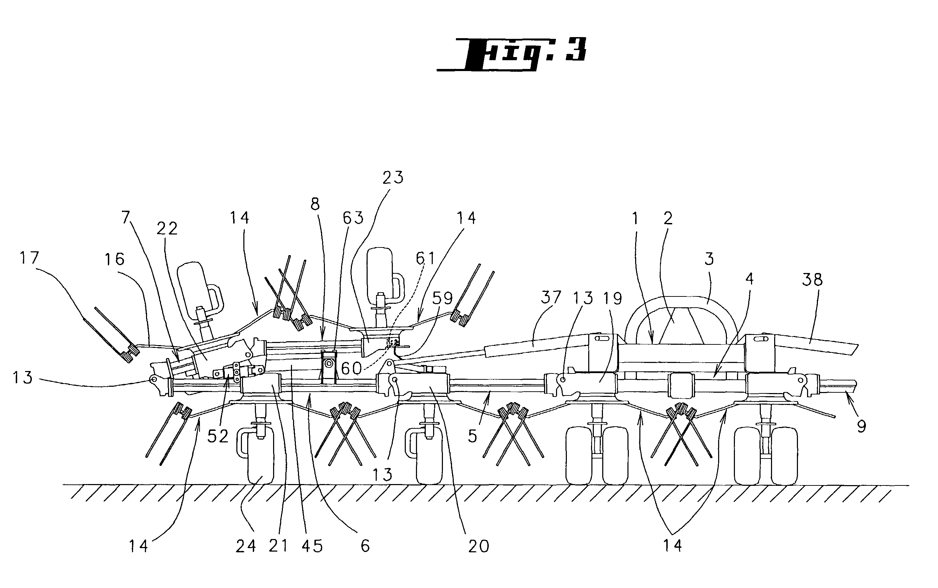

Pour transposer cette machine dans la position de transport, l'entraînement en rotation des rotors (14) est arrêté. Les deuxièmes vérins hydrauliques (45, 46) sont actionnés de telle sorte qu'ils se rétractent. Ceux-ci tirent alors sur les troisièmes tronçons latéraux (7, 11) et font pivoter ensemble ces derniers et les quatrièmes tronçons latéraux (8, 12) autour des axes d'articulation (13) avec les deuxièmes tronçons latéraux (6, 7), dans la position représentée sur la figure 3. Dans cette position, les troisièmes et quatrièmes tronçons latéraux (7, 11 et 8, 12) ont été repliés d'un angle de près de 180°. Les quatrièmes tronçons latéraux (8, 12) reposent alors sur les appuis (63, 64). Durant ledit repliement, les quatrièmes tronçons latéraux (8, 12) pivotent légèrement par rapport aux troisièmes tronçons latéraux, autour de leurs axes d'articulation (13), notamment après avoir passé la position verticale. Ce pivotement est freiné et limité par le dispositif de freinage (52, 53). La lame (55) de ce dispositif qui est freinée au moyen de la bride (56), s'engage alors davantage dans la pièce (54) en forme de fourreau et ce, jusqu'à ce qu'elle rencontre l'arrêt prévu dans celle-ci.

En sus, durant ledit repliement les tourillons (50) des vérins hydrauliques (45, 46) sont déplacés dans les orifices prévus dans les plaques (51). Dans la position repliée, ces tourillons (50) se situent dans les extrémités desdits orifices qui sont opposées à celles dans lesquelles ils se situaient au départ de la transposition. Ils se retrouvent ainsi de nouveau à une certaine distance au-dessus de l'axe d'articulation (13) entre les deuxièmes et les troisièmes tronçons latéraux (6, 10 et 7, 11). Ceci permettra aux vérins hydrauliques (45 et 46) de pousser avec un important bras de levier sur les troisièmes tronçons latéraux (7, 11) lors du retour en position de travail.

Après le repliement précité des troisièmes et quatrièmes tronçons latéraux (7, 11 et 8, 12), les premiers vérins hydrauliques (37, 38) sont actionnés de sorte qu'ils se rétractent. Ils tirent alors sur les deuxièmes tronçons latéraux (6, 10) et les font pivoter autour de leurs axes d'articulation (13) avec les premiers tronçons latéraux (5, 9). Les troisièmes et quatrièmes tronçons latéraux (7, 11 et 8, 12) se déplacent alors avec les deuxièmes tronçons latéraux (6, 10). Les pattes de blocage (61) qui sont solidaires des quatrièmes tronçons latéraux (8, 12) se rapprochent alors des verrous (60) qui sont solidaires des premiers tronçons latéraux (5, 9) et se placent sur ces verrous (60). Ces derniers se situent alors dans les orifices (62) desdites pattes (61) et bloquent les troisièmes et quatrièmes tronçons latéraux (7, 11 et 8, 12) par rapport aux deuxièmes et premiers tronçons latéraux (6, 10 et 5, 9).

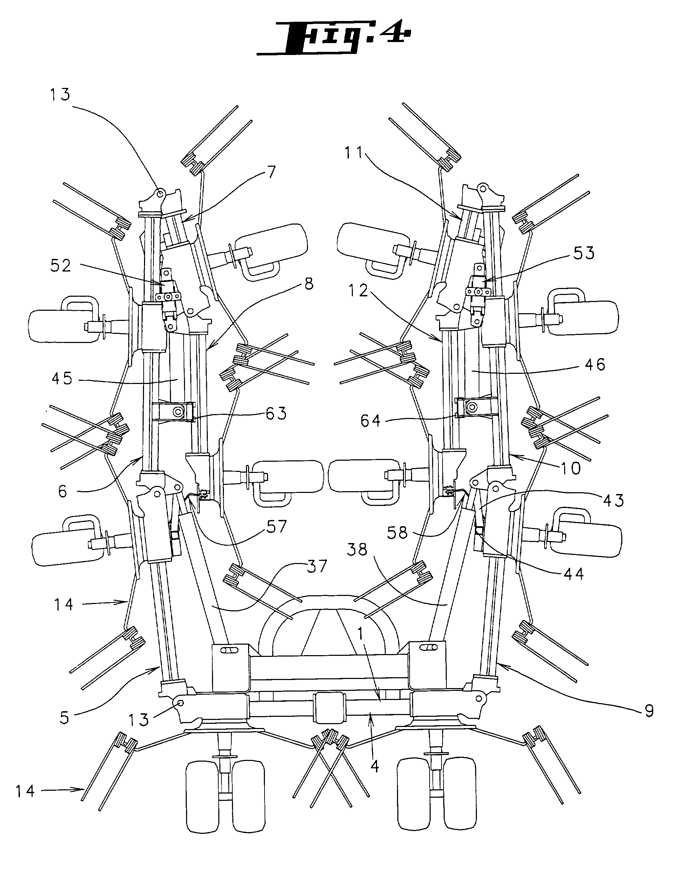

Le pivotement précité des deuxièmes tronçons latéraux (6, 10) s'effectue jusqu'à ce que leurs arrêts (43) rencontrent les butées (44) solidaires des premiers tronçons latéraux (5, 9). L'angle de pivotement obtenu est d'environ 7°. Les butées (44) bloquent alors les deuxièmes tronçons latéraux (6, 10) par rapport aux premiers tronçons latéraux (5, 9). Les premiers vérins hydrauliques (37, 38) font alors pivoter l'ensemble des tronçons latéraux (5 à 12) autour des axes d'articulation (13) avec le tronçon central (4). L'angle de pivotement autour de ces axes d'articulation est proche de 90°. Les tronçons latéraux (5 à 12) sont alors sensiblement verticaux, les premiers et deuxièmes tronçons latéraux (5, 9 et 6, 10) étant dirigés vers le haut et les troisièmes et quatrièmes tronçons latéraux (7, 11 et 8, 12) étant dirigés vers le bas à partir de leurs axes d'articulation (13) respectifs (voir figure 4). Ces tronçons latéraux (5 à 12) peuvent éventuellement être immobilisés dans cette position au moyen de verrous mécaniques associés aux vérins hydrauliques (37, 38). La largeur de la machine est ainsi très réduite sans que pour autant sa longueur soit augmentée. De ce fait, cette position est idéale pour le transport.

Pour ramener la machine dans la position de travail, les premiers vérins hydrauliques (37, 38) sont actionnés pour qu'ils s'allongent. Les tronçons latéraux (5 à 12) pivotent alors vers le bas jusqu'à ce que les roues (24) des rotors (15) des premiers et deuxièmes tronçons latéraux (5, 9 et 6, 10) reposent sur le sol. Lorsque ces deux tronçons (5, 9 et 6, 10) s'alignent, les pattes (61) des quatrièmes tronçons latéraux (8, 12) se libèrent des verrous (60). Ensuite, les deuxièmes vérins hydrauliques (45, 46) sont actionnés pour qu'ils s'allongent. Ceux-ci poussent les troisièmes et quatrièmes tronçons latéraux (7, 11 et 8, 12) vers l'extérieur et les font pivoter autour des axes d'articulation (13) avec les deuxièmes tronçons latéraux (6, 10). Les dispositifs de freinage (52, 53) ralentissent le pivotement des quatrièmes tronçons latéraux (8, 12) autour de leurs axes (13) avec les troisièmes tronçons latéraux (7, 11) lorsqu'ils ont passé la position verticale. Durant ce pivotement des troisièmes et quatrièmes tronçons latéraux (7, 11 et 8, 12) les tourillons (50) des deuxièmes vérins hydrauliques (45, 46) se déplacent vers le haut dans les fentes des plaques (51) de sorte qu'ils se situent à nouveau à une certaine distance au-dessus des axes d'articulation (13). Lorsque tous les tronçons (4 à 12) sont à nouveau alignés, les rotors (14) peuvent être entraînés en rotation tel que décrit précédemment.

Il est bien évident que l'invention n'est pas limitée au mode de réalisation décrit et représenté sur les dessins annexés. Des modifications restent possibles, notamment en ce qui concerne la constitution des divers éléments ou par substitution d'équivalents techniques, sans sortir pour autant du domaine de protection tel qu'il est défini dans les revendications.

## Revendications

1. Machine de fenaison, notamment une faneuse, comportant un châssis (1) pouvant être accouplé à un tracteur, lequel châssis (1) se compose d'un tronçon central (4) et de plusieurs tronçons latéraux (5 à 12) qui sont articulés entre eux et qui portent des rotors (14) montés sur des axes supports (18) situés à des distances (D) sensiblement identiques les uns des autres, lesquels rotors (14) sont entraînés en rotation autour desdits axes (18) au moyen d'organes de transmission qui sont logés dans les tronçons (4 à 12) du châssis (1), lesdits tronçons latéraux (5 à 12) pouvant être transposés au moyen de vérins hydrauliques (37, 38, 45, 46) dans une position de travail dans laquelle ils sont sensiblement alignés et dans une position de transport dans laquelle ils sont repliés sensiblement au-dessus du tronçon central (4), ***caractérisée par le fait* que** de chaque côté du tronçon central (4) sont disposés quatre tronçons latéraux (5 à 8 et 9 à 12) qui sont articulés entre eux au moyen d'axes (13) dirigés sensiblement dans la direction d'avancement (A), que la longueur (L1) de chaque premier tronçon latéral (5, 9) est au moins égale à la distance (D) entre les axes supports (18) de deux rotors (14) voisins, que la longueur (L2) de chaque deuxième tronçon latéral (6, 10) est nettement supérieure à la distance (D) entre les axes supports (18) de deux rotors (14) voisins, que la longueur (L3) de chaque troisième tronçon latéral (7, 11) est nettement inférieure à la distance (D) entre les axes supports (18) de deux rotors (14) voisins et que la longueur (L4) de chaque quatrième tronçon latéral (8, 12) est au plus égale à la distance (D) entre les axes supports (18) de deux rotors (14) voisins.

2. Machine selon la revendication 1, ***caractérisée par le fait* que** la somme de la longueur (L1) du premier tronçon latéral (5, 9) et de la longueur (L2) du deuxième tronçon latéral (6, 10) est supérieure d'environ la distance (D) entre les axes supports (18) de deux rotors (14) voisins, à la somme de la longueur (L3) du troisième tronçon latéral (7, 11) et de la longueur (L4) du quatrième tronçon latéral (8, 12).

3. Machine selon la revendication 1 ou 2, ***caractérisée par le fait* que** la longueur (L1) de chaque premier tronçon latéral (5, 9) est sensiblement égale à la distance (D) entre les axes supports (18) de deux rotors (14) voisins.

4. Machine selon la revendication 1 ou 2, ***caractérisée par le fait* que** la longueur (L2) de chaque deuxième tronçon latéral (6, 10) est environ 1,5 fois supérieure à la distance (D) entre les axes supports (18) de deux rotors (14) voisins.

5. Machine selon la revendication 1 ou 2, ***caractérisée par le fait* que** la longueur (L3) de chaque troisième tronçon latéral (7, 11) est égale à environ 0,6 fois la distance (D) entre les axes supports (18) de deux rotors (14) voisins.

6. Machine selon la revendication 1 ou 2, ***caractérisée par le fait* que** la longueur (L4) de chaque quatrième tronçon latéral (8, 12) est égale à environ 0,9 fois la distance (D) entre les axes supports (18) de deux rotors (14) voisins.

7. Machine selon l'une quelconque des revendications 1 à 5, ***caractérisée par le fait* que** de chaque côté du tronçon central (4) un premier vérin hydraulique (37, 38) relie ledit tronçon central (4) au deuxième tronçon latéral (6, 10) et un second vérin hydraulique (45, 46) relie ledit deuxième tronçon latéral (6, 10) au troisième tronçon latéral (7, 11).

8. Machine selon l'une quelconque des revendications 1 à 4 et 7, ***caractérisée par le fait* qu'**une butée (44) est disposée sur chaque premier tronçon latéral (5, 9) et qu'un arrêt (43) est disposé sur chaque deuxième tronçon latéral (6, 10) pour limiter le pivotement vers le haut de chaque deuxième tronçon latéral (6, 10).

9. Machine selon l'une quelconque des revendications 1, 2 et 5 à 7, ***caractérisée par le fait* qu'**un dispositif de freinage (52, 53) est monté entre chaque troisième et quatrième tronçons latéraux (7, 11 et 8, 12) pour freiner les déplacements de chaque quatrième tronçon latéral (8, 12).

10. Machine selon la revendication 9, ***caractérisée par le fait* que** le dispositif de freinage (52, 53) se compose d'une pièce (54) en forme de fourreau qui est articulée sur le troisième tronçon latéral (7, 11), d'une lame (55) qui est articulée sur le quatrième tronçon latéral (8, 12) et qui coulisse dans ladite pièce (54) et d'une bride (56) munie d'une rondelle de freinage de la lame (55).

11. Machine selon la revendication 10, ***caractérisée par le fait* que** la pièce (54) en forme de fourreau comporte un arrêt contre lequel bute la lame (55) lorsque le quatrième tronçon latéral (8, 12) est dans la position repliée.

12. Machine selon l'une quelconque des revendications précédentes, ***caractérisée par le fait* que** chaque premier tronçon latéral (5, 9) comporte un dispositif de blocage (57, 58) de chaque quatrième tronçon latéral (8, 12) dans la position repliée.

13. Machine selon la revendication 12, ***caractérisée par le fait* que** chaque premier tronçon latéral (5, 9) comporte une plaque (59) avec un verrou (60) et que chaque quatrième tronçon latéral (8, 12) comporte une patte (61) avec un orifice (62) dans lequel peut s'engager ledit verrou (60).

14. Machine selon l'une quelconque des revendications précédentes, ***caractérisée par le fait* que** les deuxièmes tronçons latéraux (6, 10) comportent des appuis (63, 64) pour les quatrièmes tronçons latéraux (8, 12) en position repliée.

## Claims

1. Haymaking machine, especially a tedder, comprising a chassis (1) that can be coupled to a tractor, which chassis (1) is composed of a central section (4) and several lateral sections (5 to 12) which are articulated together and which carry rotors (14) mounted on support spindles (18) situated substantially equal distances (D) apart, which rotors (14) are driven in rotation about said spindles (18) by means of transmission members which are housed in the sections (4 to 12) of the chassis (1), it being possible for said lateral sections (5 to 12) to be transposed by means of hydraulic rams (37, 38, 45, 46) into a work position in which they are substantially aligned and into a transport position in which they are folded substantially over the central section (4), ***characterized in* that** on each side of the central section (4) there are four lateral sections (5 to 8 and 9 to 12) which are articulated together by means of axes (13) pointing substantially in the direction of travel (A), the length (L1) of each first lateral section (5, 9) is at least equal to the distance (D) between the support spindles (18) of two adjacent rotors (14), the length (L2) of each second lateral section (6, 10) is markedly longer than the distance (D) between the support spindles (18) of two adjacent rotors (14), the length (L3) of each third lateral section (7, 11) is markedly shorter than the distance (D) between the support spindles (18) of two adjacent rotors (14), and the length (L4) of each fourth lateral section (8, 12) is at most equal to the distance (D) between the support spindles (18) of two adjacent rotors (14).

2. Machine according to claim 1, ***characterized in* that** the sum of the length (L1) of the first lateral section (5, 9) and the length (L2) of the second lateral section (6, 10) is greater than the sum of the length (L3) of the third lateral section (7, 11) and the length (L4) of the fourth lateral section (8, 12) by about the distance (D) between the support spindles (18) of two adjacent rotors (14).

3. Machine according to claim 1 or 2, ***characterized in* that** the length (L1) of each first lateral section (5, 9) is substantially equal to the distance (D) between the support spindles (18) of two adjacent rotors (14).

4. Machine according to claim 1 or 2, ***characterized in* that** the length (L2) of each second lateral section (6, 10) is approximately 1.5 times greater than the distance (D) between the support spindles (18) of two adjacent rotors (14).

5. Machine according to claim 1 or 2, ***characterized in* that** the length (L3) of each third lateral section (7, 11) is equal to approximately 0.6 times the distance (D) between the support spindles (18) of two adjacent rotors (14).

6. Machine according to claim 1 or 2, ***characterized in* that** the length (L4) of each fourth lateral section (8, 12) is equal to approximately 0.9 times the distance (D) between the support spindles (18) of two adjacent rotors (14).

7. Machine according to any one of claims 1 to 5, ***characterized in* that** on each side of the central section (4) there is a first hydraulic ram (37, 38) connecting said central section (4) to the second lateral section (6, 10) and there is a second hydraulic ram (45, 46) connecting said second lateral section (6, 10) to the third lateral section (7, 11).

8. Machine according to any one of claims 1 to 4 and 7, ***characterized in* that** there is a buffer (44) on each first lateral section (5, 9) and a stop (43) on each second lateral section (6, 10) in order to limit the upward pivoting of each second lateral section (6, 10).

9. Machine according to any one of claims 1, 2 and 5 to 7, ***characterized in* that** a braking device (52, 53) is mounted between each third and fourth lateral section (7, 11 and 8, 12) to brake the movements of each fourth lateral section (8, 12).

10. Machine according to claim 9, ***characterized in* that** the braking device (52, 53) is composed of a component (54) in the form of a sleeve which is articulated to the third lateral section (7, 11), a blade (55) which is articulated to the fourth lateral section (8, 12) and which slides in said component (54) and, a clamping piece (56) provided with a washer for braking the blade (55).

11. Machine according to claim 10, **characterized in that** the component (54) in the form of a sleeve has a stop against which the blade (55) rests when the fourth lateral section (8, 12) is in the folded position.

12. Machine according to any one of the preceding claims, ***characterized in* that** each first lateral section (5, 9) has a device (57, 58) for immobilizing each fourth lateral section (8, 12) in the folded position.

13. Machine according to claim 12, ***characterized in* that** each first lateral section (5, 9) has a plate (59) with a bolt (60) and each fourth lateral section (8, 12) has a lug (61) with a hole (62) in which said bolt (60) can engage.

14. Machine according to any one of the preceding claims, ***characterized in* that** the second lateral sections (6, 10) have rests (63, 64) for the fourth lateral sections (8, 12) in the folded position.

## Patentansprüche

1. Heuwerbungsmaschine, insbesondere Zetter, mit einem an einen Traktor ankuppelbaren Rahmen (1), der aus einem Mittelabschnitt (4) und mehreren Seitenabschnitten (5 bis 12) besteht, die aneinander angelenkt sind und Rotoren (14) tragen, die auf sich in im wesentlichen gleichen Abständen (D) voneinander befindenden Stützachsen (18) angebracht sind, wobei die Rotoren (14) mittels in den Abschnitten (4 bis 12) des Rahmens (1) gelagerten Übertragungsgliedern um die Achsen (18) drehangetrieben werden und wobei die Seitenabschnitte (5 bis 12) mittels Hydraulikzylindern (37, 38, 45, 46) in eine Arbeitsstellung, in der sie im wesentlichen aufeinander ausgerichtet sind, und in eine Transportstellung, in der sie im wesentlichen über dem Mittelabschnitt (4) eingeklappt sind, umgestellt werden können, ***dadurch gekennzeichnet,* daß** auf jeder Seite des Mittelabschnitts (4) vier Seitenabschnitte (5 bis 8 und 9 bis 12) angeordnet sind, die mittels im wesentlichen in Fahrtrichtung (A) ausgerichteten Achsen (13) aneinander angelenkt sind, daß die Länge (L1) jedes ersten Seitenabschnitts (5, 9) mindestens gleich dem Abstand (D) zwischen den Stützachsen (18) von zwei benachbarten Rotoren (14) ist, daß die Länge (L2) jedes zweiten Seitenabschnitts (6, 10) deutlich größer als der Abstand (D) zwischen den Stützachsen (18) von zwei benachbarten Rotoren (14) ist, daß die Länge (L3) jedes dritten Seitenabschnitts (7, 11) deutlich geringer als der Abstand (D) zwischen den Stützachsen (18) von zwei benachbarten Rotoren (14) ist und daß die Länge (L4) jedes vierten Seitenabschnitts (8, 12) höchstens gleich dem Abstand (D) zwischen den Stützachsen (18) von zwei benachbarten Rotoren (14) ist.

2. Maschine nach Anspruch 1, ***dadurch gekennzeichnet,* daß** die Summe der Länge (L1) des ersten Seitenabschnitts (5, 9) und der Länge (L2) des zweiten Seitenabschnitts (6, 10) um ungefähr den Abstand (D) zwischen den Stützachsen (18) von zwei benachbarten Rotoren (14) größer ist als die Summe der Länge (L3) des dritten Seitenabschnitts (7, 11) und der Länge (L4) des vierten Seitenabschnitts (8, 12).

3. Maschine nach Anspruch 1 oder 2, ***dadurch gekennzeichnet,* daß** die Länge (L1) jedes ersten Seitenabschnitts (5, 9) im wesentlichen gleich dem Abstand (D) zwischen den Stützachsen (18) von zwei benachbarten Rotoren (14) ist.

4. Maschine nach Anspruch 1 oder 2, ***dadurch gekennzeichnet,* daß** die Länge (L2) jedes zweiten Seitenabschnitts (6, 10) ca. das 1,5fache des Abstands (D) zwischen den Stützachsen (18) von zwei benachbarten Rotoren (14) beträgt.

5. Maschine nach Anspruch 1 oder 2, ***dadurch gekennzeichnet,* daß** die Länge (L3) jedes dritten Seitenabschnitts (7, 11) ca. das 0,6fache des Abstands (D) zwischen den Stützachsen (18) von zwei benachbarten Rotoren (14) beträgt.

6. Maschine nach Anspruch 1 oder 2, ***dadurch gekennzeichnet,* daß** die Länge (L4) jedes vierten Seitenabschnitts (8, 12) ca. das 0,9fache des Abstands (D) zwischen den Stützachsen (18) von zwei benachbarten Rotoren (14) beträgt.

7. Maschine nach irgend einem der Ansprüche 1 bis 5, ***dadurch gekennzeichnet,* daß** auf jeder Seite des Mittelabschnitts (4) ein erster Hydraulikzylinder (37, 38) den Mittelabschnitt (4) mit dem zweiten Seitenabschnitt (6, 10) verbindet und ein zweiter Hydraulikzylinder (45, 46) den zweiten Seitenabschnitt (6, 10) mit dem dritten Seitenabschnitt (7, 11) verbindet.

8. Maschine nach irgend einem der Ansprüche 1 bis 4 und 7, ***dadurch gekennzeichnet,* daß** ein Anschlag (44) an jedem ersten Seitenabschnitt (5, 9) und daß ein Halteelement (43) an jedem zweiten Seitenabschnitt (6, 10) angeordnet sind, um das Nachobenschwenken jedes zweiten Seitenabschnitts (6, 10) zu begrenzen.

9. Maschine nach irgend einem der Ansprüche 1, 2 und 5 bis 7, ***dadurch gekennzeichnet,* daß** eine Bremsvorrichtung (52, 53) zwischen jedem dritten und vierten Seitenabschnitt (7, 11 und 8, 12) angebracht ist, um die Bewegungen jedes vierten Seitenabschnitts (8, 12) zu bremsen.

10. Maschine nach Anspruch 9, ***dadurch gekennzeichnet,* daß** die Bremsvorrichtung (52, 53) aus einem an dem dritten Seitenabschnitt (7, 11) angelenkten buchsenförmigen Teil (54), einem an dem vierten Seitenabschnitt (8, 12) angelenkten und in dem Teil (54) gleitenden Blatt (55) und einem mit einer Scheibe zur Bremsung des Blatts (55) versehenen Flansch (56) besteht.

11. Maschine nach Anspruch 10, ***dadurch gekennzeichnet,* daß** das buchsenförmige Teil (54) ein Halteelement aufweist, gegen das das Blatt (55) anstößt, wenn sich der vierte Seitenabschnitt (8, 12) in eingeklappter Stellung befindet.

12. Maschine nach irgend einem der vorhergehenden Ansprüche, ***dadurch gekennzeichnet,* daß** jeder erste Seitenabschnitt (5, 9) eine Vorrichtung (57, 58) zur Blockierung jedes vierten Seitenabschnitts (8, 12) in der eingeklappten Stellung aufweist.

13. Maschine nach Anspruch 12, ***dadurch gekennzeichnet,* daß** jeder erste Seitenabschnitt (5, 9) eine Platte (59) mit einem Riegel (60) aufweist und daß jeder vierte Seitenabschnitt (8, 12) einen Ansatz (61) mit einer Öffnung (62) aufweist, in die der Riegel (60) eingreifen kann.

14. Maschine nach irgend einem der vorhergehenden Ansprüche, ***dadurch gekennzeichnet,* daß** die zweiten Seitenabschnitte (6, 10) Stützen (63, 64) für die vierten Seitenabschnitte (8, 12) in eingeklappter Stellung aufweisen.
